# EUROPEAN PATENT SPECIFICATION

(11) **EP 0 684 755 B1**
(45) Date of publication and mention of the grant of the patent: **01.07.1998**
(21) Application number: 95104934.5
(22) Date of filing: 03.04.1995
(51) Int. Cl.: H05B 41/29, H05B 41/04

(54) **A supply circuit for a gas-discharge lamp, particularly for motor vehicles**
Versorgungsschaltung für eine Entladungslampe, insbesondere für ein Fahrzeug
Circuit d'alimentation d'une lampe à décharge en particulier pour un véhicule

(30) Priority: 26.05.1994 IT TO940434
(43) Date of publication of application: 29.11.1995
(73) Proprietor: MAGNETI MARELLI S.p.A., 20145 Milano (IT)
(72) Inventor: Fratta, Antonino, I-10144 Torino (IT); Nepote, Andrea, I-10131 Torino (IT)
(74) Representative: Quinterno, Giuseppe

(56) References cited:
- EP-A- 0 411 617
- EP-A- 0 595 414

## Description

The present invention relates to a supply circuit for a gas-discharge lamp particularly for motor vehicles.

More specifically, the invention relates to a circuit comprising:
a dc/dc converter the input of which can be connected to a direct-current voltage supply,
an H-shaped bridge circuit with first and second input terminals connected to the output of the dc/dc converter by means of a filter capacitor, and with two output terminals between which the lamp is connectable, the bridge circuit comprising four controlled switches, each of which is disposed between an input terminal and an output terminal of the bridge, and which can be driven in alternate pairs to form, with the lamp, two paths or diagonals of the bridge circuit which can be connected selectively to the filter capacitor,
a transformer for starting the current-flow in the lamp, including a primary winding and a secondary winding, the latter being connectable in series with the lamp between the output terminals of the bridge circuit,
a starter circuit, connected to the primary winding of the transformer for causing a pulsed current to flow in the primary winding to start the current-flow in the lamp, and
control-circuit means connected to the control inputs of the switches of the bridge circuit.

Such a circuit is disclosed in EP 595 414 and EP 411 617.

In known circuits of the type defined above, before current starts to flow in the lamp, the control-circuit means drive the switches of the two diagonals of the bridge circuit so that they conduct alternately at a predetermined frequency. The current-flow in the lamp may thus start randomly whilst one or other diagonal of the bridge circuit is conductive. When the current starts to flow in the lamp, the sign or direction of the current in the lamp may or may not be reversed, according to which diagonal of the bridge circuit is conducting. If the sign or direction of current in the lamp is reversed, there is a danger that the lamp will go out as a result of the zero-crossing of the current. An object of the present invention is to provide a supply circuit for a gas-discharge lamp of the type defined above which avoids the risk of the lamp going out.

Such an object is already known from EP 595 414.

This object is achieved, according to the invention, by a supply circuit of the type specified above, the main characteristic of which lies in the fact that the control-circuit means are arranged to drive the bridge circuit in a manner such that, the switches which are conductive when current starts to flow in the lamp belong to the path or diagonal of the bridge for which the currents flowing in the lamp as a result of the flow of the pulsed current in the primary winding of the starter transformer and as a result of the discharge of the filter capacitor, respectively, circulate in the same direction.

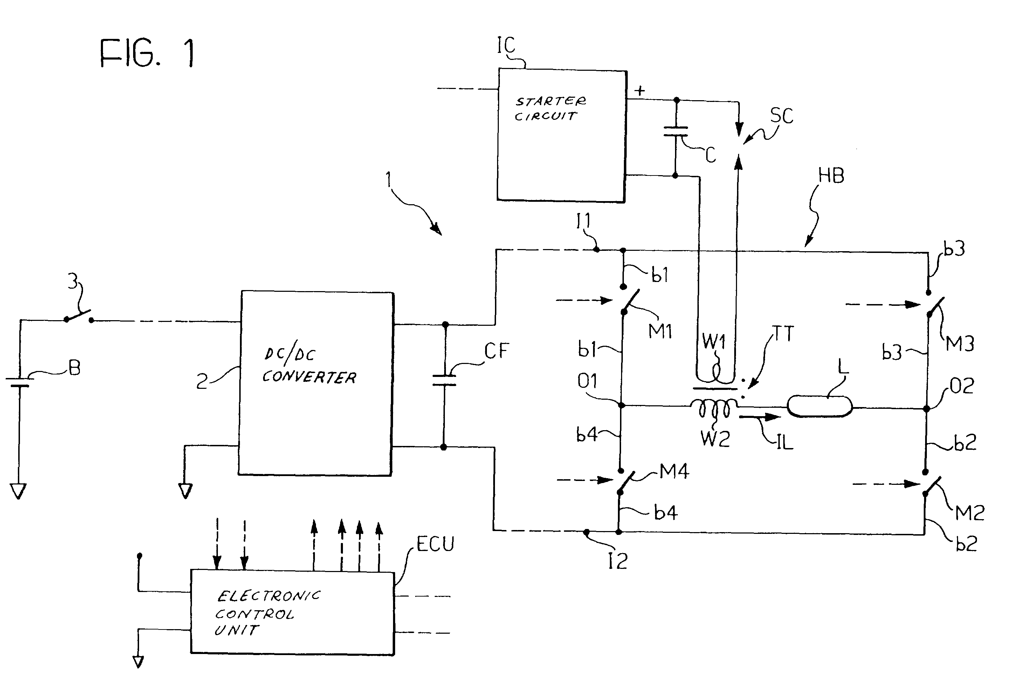

Further objects, characteristics and advantages of the invention will become clear from the detailed description which follows purely by way of non-limiting example, with reference to the appended drawings, in which Figures 1 to 3 show circuit diagrams, partially in block form, of possible embodiments of the circuit according to the invention.

In Figure 1, a gas-discharge lamp, indicated L, is connected to a supply circuit according to the invention, generally indicated 1. The circuit comprises a dc/dc converter 2 of known type, the input of which can be connected to a direct-current voltage supply B (for example, the battery of a motor vehicle) by means of a control switch 3.

The output of the converter 2 is connected to a capacitor C_{F}. Typically, this capacitor has the function of filtering the voltage which the converter 2 applies between the input terminals I1 and I2 of an H-shaped bridge circuit, generally indicated HB. The bridge circuit has two output terminals O1, O2, between which the lamp L is connected in series with the secondary winding W2 of a starting transformer TT. The transformer is typically a pulse transformer (a Tesla transformer).

The bridge circuit HB comprises four electronic switches M1-M4 constituted, for example, by MOSFET transistors. Each of these switches is connected in a respective branch b1-b4 of the bridge circuit HB, between an input terminal I1, I2 and an output terminal O1, O2. The control inputs of the switches are connected to corresponding outputs of an electronic control unit ECU which is arranged to drive them so that they conduct in alternate pairs (M1, M2 and M3, M4, respectively) to form (with the lamp L and the winding W2) two paths or diagonals of the bridge which can be connected selectively to the capacitor C_{F} and thus to the output of the converter 2.

The starting transformer TT has its primary winding W1 (which, typically, is formed by a few turns) connected in series with a discharger SC. This discharger may have a striking potential, for example, of 1000 V ± 15%, that is, for example, between 850 and 1150 V.

A starting capacitor C is connected in parallel with the series formed by the winding W1 and the discharger SC. This capacitor is connected to the output of a starter circuit IC of known type for charging the capacitor to a voltage high enough to cause a discharge in the discharger SC in order to start the current-flow in the lamp L. When this discharge takes place in operation, the capacitor C is discharged rapidly into the primary winding W1 of the transformer TT causing an overvoltage to appear between the terminals of the secondary winding W2.

The control unit ECU is arranged to cause the switches of a specific diagonal to be closed (that is, conductive) in the bridge circuit HB when the capacitor C is discharged into the winding W1 of the transformer TT so that the current flowing in the lamp L as a result of the overvoltage created in the secondary winding W2 and the current flowing in the lamp as a result of the discharge of the filter capacitor C_{F} circulate in the same direction.

With reference to Figure 1, if the plate of the capacitor C which is at the higher potential is that indicated by the + sign in the drawing and if the coupling between the windings of the transformer TT is that corresponding to the conventional dots in the drawing, the diagonal of the bridge circuit HB which satisfies the aforesaid condition (the aforementioned components of the current in the lamp L having the same direction) is that including the electronic switches M1 and M2. With reference to Figure 1, the unit ECU is therefore arranged to cause the switches M1 and M2 to be conductive when current starts to flow in the lamp, whilst the switches M3 and M4 are cut off.

After current has started to flow in the lamp L, the control unit ECU drives the two pairs of switches M3, M4 and M1, M2, respectively, in an on-off manner, so that they are conductive alternately thus making the two diagonals of the bridge circuit conductive alternately, in known manner.

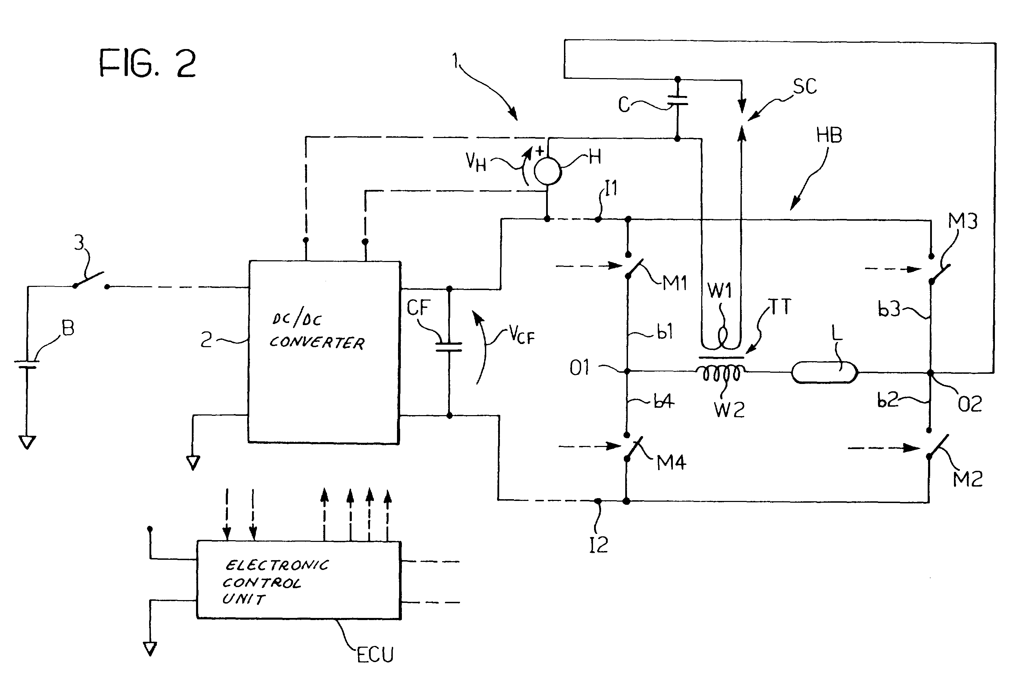

Figure 2 shows a particular embodiment of a circuit according to the invention. In this drawing, parts and elements already described have again been given the same reference numerals.

In the circuit of Figure 2, a direct-current high-voltage supply, indicated H, can supply, for example, a voltage of 800 V. The supply may be constituted, for example, by an additional output of the dc/dc converter 2.

The supply H has one terminal connected to the input terminal I1 of the bridge circuit HB and its other terminal connected to a plate of the starting capacitor C. The other plate of the capacitor C is connected to the output terminal O2 of the bridge.

The control unit ECU is connected to the filter capacitor C_{F} (in a manner not shown) so as to be able to detect the voltage which develops at the terminals thereof after the closure of the control switch 3. This unit is also arranged to pilot the starting of the current-flow in the lamp L in the following manner.

The unit ECU first causes the switch M3 to close or become conductive. In this condition, the starting capacitor C is connected to the supply H and tends to be charged to the supply voltage V_{H}. Conveniently, the voltage V_{H} has a value below the minimum threshold of the breakdown voltage of the discharger SC. If, as stated above, the breakdown voltage of the discharger is 1000 V ± 15%, the voltage V_{H} is conveniently, for example 800 V.

As soon as the voltage V_{CF} in the capacitor C_{F} reaches a predetermined value (for example, 360 V), the ECU then causes the switch M3 to open and the switch M2 to close. In this situation, the starting capacitor C tends to be charged to a voltage equal to the sum of V_{CF} and V_{H}. With the numerical data indicated above by way of example, at this stage, the capacitor C tends to be thus charged to a voltage of 800 + 360 = 1160 V, and hence to a voltage greater than the maximum value of the breakdown voltage of the discharger SC. A discharge is therefore certain to occur in the discharger SC whilst the voltage in the capacitor C is increasing towards this value, and this discharge takes place when the voltage in the capacitor C_{F} is certain to have reached the minimum value indicated above.

Simultaneously with the closure of M2 described above, the ECU also closes the switch M1. In the case of Figure 2, the diagonal of the bridge circuit HB for which current starts to flow in the lamp is therefore that which includes the switches M1 and M2.

The circuit described above with reference to the drawing thus ensures that current starts to flow in the lamp at a moment at which the voltage in the output capacitor C_{F} of the converter 2 is sure to have reached an adequate value. (In fact, it is important that the voltage in C_{F} reaches an adequate value since, after starting, it is actually the discharge current of this capacitor which flows in the lamp L; if the capacitor C_{F} were insufficiently charged, the lamp L might go out immediately after starting). Whilst the voltage in the capacitor C_{F} is brought to this value, the voltage in the starting capacitor C is brought to a value which is quite high but is nevertheless sure to be lower than the minimum threshold of the breakdown voltage of the discharger SC.

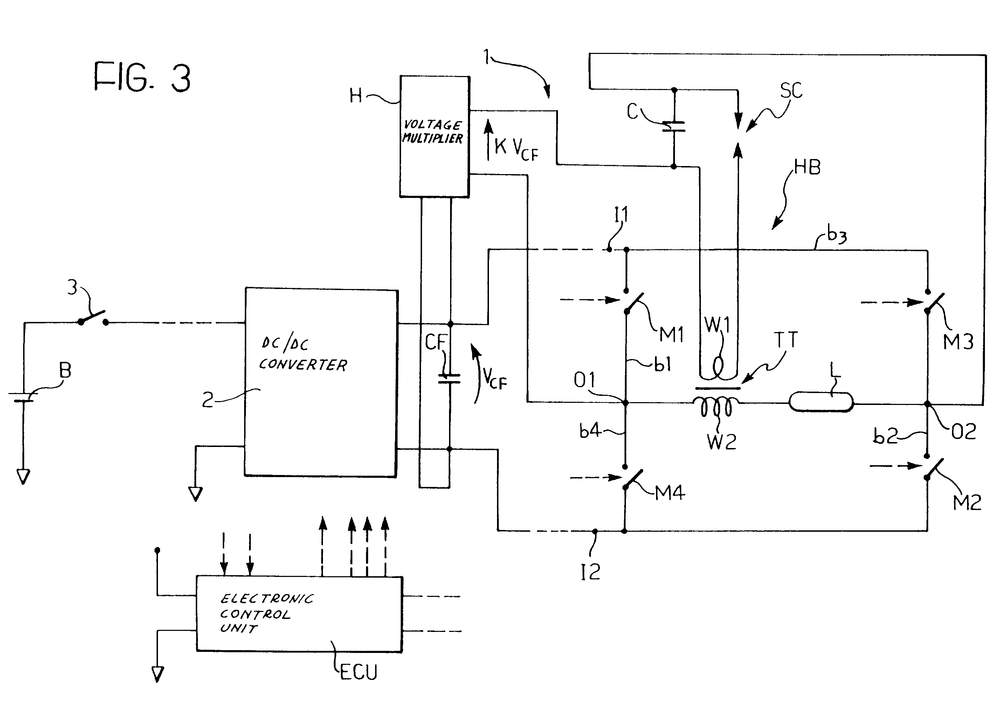

Figure 3 shows a variant of the circuit of Figure 2.

In the circuit of Figure 3, the direct-current high-voltage supply H is constituted by a voltage multiplier the input terminals of which are connected to the terminals of the capacitor C_{F}. The voltage multiplier has one output terminal connected to the output O1 of the bridge circuit HB and the other terminal connected to a plate of the starting capacitor C. The other plate of the capacitor is again connected to the output terminal O2.

In operation, a voltage kV_{CF}, where k is greater than 1, for example 3, is generated between the output terminals of the voltage multiplier H.

The control unit ECU of the circuit according to Figure 3 pilots the starting of the current-flow in the lamp L in the following manner.

The unit ECU first closes the switches M3 and M4. In this condition, the starter capacitor C is charged to a voltage of (k-1)V_{CF}. If V_{CF} is less than or equal to, for example, 360 V and k = 3, at this stage, the starting capacitor C is thus charged to a voltage equal to or less than 720 V, and hence to a voltage below the minimum threshold of the breakdown voltage of the discharger SC.

As soon as the voltage V_{CF} in the capacitor C_{F} reaches a predetermined value (for example, 360 V), the unit ECU cuts off the switches M3 and M4 and closes the switches M1 and M2. In this condition, the voltage in the starting capacitor C tends to be brought to the value (k+1)V_{CF} and hence to a value equal to or greater than 1440 V. The discharge in the discharger SC and the start of conduction in the lamp L are therefore sure to take place whilst the voltage in the capacitor C is rising at this stage.

The circuit of Figure 3 can thus also start the current-flow in the lamp L whilst a predetermined diagonal of the bridge circuit HB is conductive (in this case, that including the switches M1 and M2), and surely after the voltage in the capacitor C_{F} has reached a predetermined level.

In the circuit of Figure 3, the direct-current voltage supply H could, on the other hand, be constituted by an additional output of the converter 2, as stated above with reference to Figure 2. Moreover, in the circuit of Figure 2, the supply H could be formed as described above in connection with Figure 3, that is, by a multiplier (or, more generally, a voltage raiser) connected to the capacitor C_{F}.

In general, the flow of current in a gas-discharge lamp may be critical at the stage immediately following the starting of conduction in the lamp, in the sense that, if the switching of the current (brought about by the unit ECU which pilots the diagonals M1, M2 and M3, M4 of the bridge circuit HB so that they are conductive alternately) takes place prematurely, the lamp might go out.

To avoid this potential problem, the control unit ECU of a circuit according to the invention is conveniently arranged so that the switches of the diagonal of the bridge circuit HB which was conductive when conduction started are kept closed immediately after current starts to flow in the lamp L for a predetermined period of time longer than the period corresponding to the switching frequency of the current in the lamp in normal running conditions. This period of time for which the diagonal of the bridge circuit with which the current-flow was started in the lamp is kept conductive is conveniently long enough for the current-flow in the lamp to reach a non-critical condition.

In gas-discharge lamps, the current intensity decreases appreciably immediately after conduction starts (the so-called "take-over" and heating or "warm-up" stages of the lamp) and, in normal running conditions, settles at a low value.

If, as stated above, the diagonal of the bridge circuit HB in which conduction was started is kept conductive for a certain period of time after starting, the electrodes of the lamp may be quite stressed since, for this period of time, there is a flow of ions which always leaves the same electrode and always strikes the same other electrode . Moreover, at this stage, as just mentioned, the intensity of the current flowing in the lamp is quite high.

Conveniently, in order to compensate for the initial stressing of the lamp L, the unit ECU may be arranged in a manner such that, after the initial prolonged closure of the diagonal for which the current-flow in the lamp starts, the two diagonals of the bridge are piloted alternately in an on-off manner with conduction times which are longer, on average, for the diagonal of the bridge HB which was cut off or open upon starting. This can be achieved by the unit ECU by an alteration of the frequency and/or the duty cycle for driving the switches of the two diagonals of the bridge circuit such that the average value of the current flowing in the lamp L in one conduction direction tends, over a predetermined period of time, to equal the average value of the current flowing in the lamp in the other direction. This control procedure can advantageously compensate for or balance the initial stressing of the lamp.

This compensation can be carried out by the control unit ECU either in a non-adaptive manner, based on predetermined procedures, or in an adaptive manner achieved, for example, with voltage and/or current sensors connected to the unit ECU for detecting any asymmetrical operation of the lamp.

## Claims

1. A supply circuit for a gas-discharge lamp (L) comprising:
a dc/dc converter (2) the input of which can be connected to a direct-current voltage supply (B),
an H-shaped bridge circuit (HB) with first and second input terminals (I1, I2) connected to the output of the converter (2) parallel to a filter capacitor (C_{F}), and with two output terminals (O1, O2) between which the lamp (L) is connectable, and comprising four controlled switches (M1-M4) each of which is disposed between an input terminal (I1, I2) and an output terminal (O1, O2) of the bridge circuit (HB) and which can be driven in alternate pairs to form, with the lamp (L), two paths or diagonals of the bridge (HB) which can be connected selectively to the capacitor (C_{F}),
a transformer (TT) for starting the current-flow in the lamp (L), including a primary winding (W1) and a secondary winding (W2), the latter being connectable in series with said lamp (L) between the output terminals (O1, O2) of the bridge circuit (HB),
a starter circuit (IC; H; C; SC) connected to the primary winding of the transformer (TT) for causing a pulsed current to flow in the primary winding (W1) to start the current-flow in the lamp (L), and
control-circuit means (ECU) connected to the control inputs of the switches (M1-M4) of the bridge circuit (HB),
characterized in that the control-circuit means (ECU) are arranged to pilot the bridge circuit (HB) in a manner such that the switches which are conductive when current starts to flow in the lamp (L) belong to the path or diagonal of the bridge circuit (HB) for which the currents flowing in the lamp (L) as a result of the flow of the pulsed current in the primary winding of the starter transformer (TT) and as a result of the discharge of the filter capacitor (C_{F}), respectively, circulate in the same direction.

2. A circuit according to Claim 1, in which the control-circuit means (ECU) are connected to the filter capacitor (C_{F}) and are arranged to detect the voltage (V_{CF}) at its terminals, and in which the starter circuit comprises a discharger (SC) in series with the primary winding (W1) of the transformer (TT), a starting capacitor (C) connected in parallel with the series formed by the discharger (SC) and the primary winding (W1), and voltage-generator means (H) for charging the capacitor (C) to a voltage high enough to bring about a discharge in the discharger (SC), the breakdown voltage of the discharger (SC) being between predetermined minimum and maximum values,
the circuit being characterized in that the starter circuit (H, C, SC) is connected to the bridge circuit (HB) and the arrangement is such that, before the current starts to flow in the lamp, the starting capacitor (C) can be charged to a first voltage value below the minimum value of the breakdown voltage of the discharger (SC) as a result of the selective closure of at least one switch of a first diagonal of the bridge circuit (HB) and the subsequent selective closure of at least one switch of the other diagonal of the bridge circuit (HB), and is then charged to a second value which is higher than the first and high enough to bring about a discharge in the discharger (SC), the control-circuit means (ECU) being arranged so that, before the current starts to flow in the lamp, they bring about the selective closure of the switches of the other diagonal of the bridge circuit (HB) only after the voltage in the filter capacitor (C_{F}) has reached a predetermined value.

3. A circuit according to Claim 2, characterized in that the voltage-generator means comprise a direct-current high-voltage supply (H) connected in series with the starting capacitor (C) between an input terminal (I1) and an output terminal (O2) of the bridge circuit (HB) and in that the control-circuit means (ECU) are arranged for selectively causing the conduction of the switches (M3, M2) of the bridge circuit (HB) connected to the output terminal (O2) before the current starts to flow in the lamp.

4. A circuit according to Claim 2, characterized in that the voltage-generator means comprise a direct-current high-voltage supply (H) connected in series with the starting capacitor (C) between the output terminals (O1, O2) of the bridge circuit (HB), and the control circuit means (ECU) are arranged for selectively causing the conduction of the switches (M3, M4; M1, M2) of one diagonal and of the other diagonal of the bridge circuit (HB), respectively, before the current starts to flow in the lamp (L).

5. A circuit according to Claim 3 or Claim 4, characterized in that the direct-current high voltage supply is derived from the converter (2).

6. A circuit according to Claim 4, characterized in that the direct-current high-voltage supply (H) comprises a voltage-raiser circuit having its input terminals connected to the filter capacitor (C_{F}) and its output terminals connected to the starting capacitor (C) and to an output terminal (O1) of the bridge circuit (HB).

7. A circuit according to any one of the preceding claims, in which the control-circuit means (ECU) are arranged, in normal running conditions after the current has started to flow in the lamp, to pilot the switches (M1, M2; M3, M4) of the two diagonals of the bridge circuit (HB) alternately in an on-off manner at a predetermined switching frequency,
the circuit being characterized in that the control-circuit means (ECU) are arranged so that the switches of the diagonal of the bridge circuit (HB) which was conductive when conduction started continue to be kept conductive immediately after the current starts to flow in the lamp for a predetermined period of time longer than the period corresponding to the switching frequency.

8. A circuit according to Claim 7, characterized in that the control-circuit means (ECU) are arranged to drive the switches of one diagonal and of the other diagonal of the bridge circuit (HB) alternately, after the current starts to flow in the lamp (L), in a manner such that the average value of the current flowing in the lamp (L) in one direction over a predetermined time interval tends substantially to equal the average value of the current flowing in the lamp (L) in the other direction.

9. A circuit according to Claim 8, characterized in that the control-circuit means (ECU) are arranged to regulate the average value of the current flowing in the lamp (L) in one direction and in the other direction according to predetermined procedures, in a non-adaptive manner.

10. A circuit according to Claim 8, characterized in that the control-circuit means (ECU) are arranged to regulate the average value of the current flowing in the lamp (L) in one direction and in the other direction according to lamp voltage and/or current conditions, in an adaptive manner.

## Patentansprüche

1. Anspeisestufe für eine Gasentladungslampe (L), wobei die Anspeisestufe enthält:
einen Gleichspannungswandler (2), dessen Eingang mit einer Gleichspannungsquelle (B) verbunden werden kann;
eine H-Brückenschaltung (HB) mit einem ersten und einem zweiten Eingang (I1, I2), die am Ausgang des Wandlers (2) parallel zu einem Siebkondensator (C_{F}) liegen, sowie mit zwei Ausgängen (O1, O2), zwischen denen die Lampe (L) angeschlossen werden kann, wobei die Brückenschaltung vier gesteuerte Schalter (M1-M4) enthält, von denen jeder zwischen einem Eingang (I1, I2) und einem Ausgang (O1, O2) der Brückenschaltung (HB) liegt und abwechselnden paarweise angesteuert werden kann, um mit der Lampe (L) zwei Zweige oder Diagonalen der Brücke (HB) zu bilden, die wahlweise mit dem Kondensator (C_{F}) verbunden werden können,
einen Transformator (TT), um den Stromfluß durch die Lampe (L) zu starten, wobei der Transformator (TT) eine Primärwicklung (W1) und eine Sekundärwicklung (W2) aufweist, wobei die Sekundärwicklung (W2) zwischen den Ausgängen (O1, O2) der Brückenschaltung (HB) mit der Lampe (L) in Serie geschaltet werden kann,
eine Starterstufe (IC; H; C; SC), die mit der Primärwicklung des Transformators (TT) verbunden ist, um in der Primärwicklung (W1) einen pulsierenden Strom fließen zu lassen, um den Stromfluß durch die Lampe (L) zu starten, und
eine Steuerstufe (ECU), die mit den Steuereingängen der Schalter (M1-M4) in der Brückenschaltung (HB) verbunden ist,
dadurch gekennzeichnet, daß die Steuerstufe (ECU) so angeordnet ist, um die Brückenschaltung (HB) so zu steuern, daß die Schalter, die leiten, wenn durch die Lampe (L) Strom zu fließen beginnt, zu jenem Zweig oder zu jener Diagonale der Brückenschaltung (HB) gehören, für die jene Ströme, die durch die Lampe (L) dadurch fließen, daß durch die Primärwicklung des Startertransformators (TT) der pulsierende Strom fließt bzw. eine Entladung des Siebkondensators (C_{F}) erfolgt, in der gleichen Richtung umlaufen.

2. Stufe gemäß Anspruch 1, wobei die Steuerstufe (ECU) mit dem Siebkondensator (C_{F}) verbunden und so angeordnet ist, um die Spannung (V_{CF}) an dessen Anschlüssen abzutasten, und wobei die Starterstufe eine Funkenstrecke (SC), die mit der Primärwicklung (W1) des Transformators (TT) in Serie liegt, einen Starterkondensator (C), der parallel zur Serienschaltung aus der Funkenstrecke (SC) und der Primärwicklung (W1) liegt, sowie einen Spannungsgenerator (H) enthält, um den Kondensator (C) auf eine Spannung zu laden, die hoch genug ist, um eine Entladung in der Entladungsstrecke (SC) hervorzurufen, wobei die Zündspannung der Funkenstrecke (SC) zwischen einem vorgegebenen Minimalwert und Maximalwert liegt,
wobei die Stufe dadurch gekennzeichnet ist, daß die Starterstufe (H, C, SC) mit der Brückenschaltung (HB) verbunden und so aufgebaut ist, daß der Starterkondensator (C) vor dem Beginn des Stromflusses durch die Lampe auf einen ersten Spannungswert, der unter dem Minimalwert der Zündspannung der Funkenstrecke (SC) liegt, durch das wahlweise Schließen von zumindest einem Schalter einer ersten Diagonale der Brückenschaltung (HB) und dem nachfolgenden wahlweisen Schließen von zumindest einem Schalter der anderen Diagonale der Brückenschaltung (HB) geladen werden kann, wobei er dann auf einen zweiten Wert geladen wird, der höher als der erste Wert und groß genug ist, um eine Entladung in der Funkenstrecke (SC) hervorzurufen, wobei die Steuerstufe (ECU) so angeordnet ist, daß sie vor dem Beginn des Stromflusses durch die Lampe das wahlweise Schließen der Schalter in der anderen Diagonale der Brückenschaltung (HB) nur dann hervorruft, nachdem die Spannung im Siebkondensator (C_{F}) einen vorgegebenen Wert erreicht hat.

3. Stufe gemäß Anspruch 2, dadurch gekennzeichnet, daß der Spannungsgenerator eine Hochgleichspannungsquelle (H) enthält, die mit dem Starterkondensator (C) zwischen einem Eingang (I1) und einem Ausgang (O2) der Brückenschaltung (HB) in Serie liegt, und daß die Steuerstufe (ECU) so angeordnet ist, um wahlweise das Leitendmachen der Schalter (M3, M2) der Brückenschaltung (HB), die mit dem Ausgang (O2) verbunden sind, zu bewirken, bevor der Stromfluß durch die Lampe beginnt.

4. Stufe gemäß Anspruch 2, dadurch gekennzeichnet, daß der Spannungsgenerator eine Hochgleichspannungsquelle (H) enthält, die mit dem Starterkondensator (C) zwischen den Ausgängen (O1, O2) der Brückenschaltung (HB) in Serie liegt, wobei die Steuerstufe (ECU) so angeordnet ist, um wahlweise das Leitendmachen der Schalter (M3, M4; M1, M2) von einer Diagonale bzw. der anderen Diagonale der Brückenschaltung (HB) zu bewirken, bevor der Stromfluß durch die Lampe (L) beginnt.

5. Stufe gemäß Anspruch 3 oder Anspruch 4, dadurch gekennzeichnet, daß die Hochgleichspannungsquelle vom Wandler (2) hergeleitet wird.

6. Stufe gemäß Anspruch 4, dadurch gekennzeichnet, daß die Hochgleichspannungsquelle (H) eine Spannungshebestufe enthält, deren Eingänge am Siebkondensator (C_{F}) liegen und deren Ausgänge mit dem Starterkondensator (C) sowie mit einem Ausgang (O1) der Brückenschaltung (HB) verbunden sind.

7. Stufe gemäß irgendeinem der bisherigen Ansprüche, wobei die Steuerstufe (ECU) so angeordnet ist, um im normalen Betriebszustand, nachdem der Stromfluß durch die Lampe begonnen hat, die Schalter (M1, M2; M3, M4) in den Diagonalen der Brückenschaltung (HB) mit einer vorgegebenen Umschaltfrequenz abwechselnd im EIN/AUS-Betrieb zu steuern,
wobei die Stufe dadurch gekennzeichnet ist, daß die Steuerstufe (ECU) so angeordnet ist, daß die Schalter in jener Diagonale der Brückenschaltung (HB), die dann leitend war, wenn der Stromfluß begonnen hat, unmittelbar nach dem Beginn des Stromflusses durch die Lampe für ein vorgegebenes Zeitintervall weiterhin leitend gehalten wird, das länger als jenes Intervall ist, das der Umschaltfrequenz entspricht.

8. Stufe gemäß Anspruch 7, dadurch gekennzeichnet, daß die Steuerstufe (ECU) so angeordnet ist, um die Schalter in der einen Diagonale und in der anderen Diagonale der Brückenschaltung (HB), nachdem der Stromfluß durch die Lampe (L) begonnen hat, abwechselnd so anzusteuern, daß der Mittelwert des Stroms, der durch die Lampe (L) in einer Richtung über ein vorgegebenes Zeitintervall fließt, dazu neigt, im wesentlichen gleich dem Mittelwert jenes Stroms zu sein, der in der anderen Richtung durch die Lampe (L) fließt.

9. Stufe gemäß Anspruch 8, dadurch gekennzeichnet, daß die Steuerstufe (ECU) so angeordnet ist, um den Mittelwert jenes Stroms, der durch die Lampe (L) in der einen Richtung und in der anderen Richtung fließt, in Übereinstimmung mit vorgegebenen Vorgängen nichtanpassungsfähig zu regeln.

10. Stufe gemäß Anspruch 8, dadurch gekennzeichnet, daß die Steuerstufe (ECU) so angeordnet ist, um den Mittelwert jenes Stroms, der in der einen Richtung und in der anderen Richtung durch die Lampe (L) fließt, in Übereinstimmung mit der Lampenspannung und/oder dem Strom anpassungsfähig zu regeln.

## Revendications

1. Circuit d'alimentation pour lampe à décharge (L) comprenant :
un convertisseur CC/CC (2) dont l'entrée peut être connectée à une source de tension d'alimentation en courant continu (B),
un circuit en pont en forme de H (HB) ayant des première et seconde bornes d'entrée (I1, I2) connectées à la sortie du convertisseur (2) parallèle à un condensateur de filtrage (C_{F}), et deux bornes de sortie (01, 02) entre lesquelles la lampe (L) peut être connectée, et comprenant quatre commutateurs commandés (M1-M4) dont chacun est disposé entre une borne d'entrée (I1, I2) et une borne de sortie (01, 02) du circuit en pont (HB) et qui peuvent être commandés en paires alternées pour former, avec la lampe (L), deux voies ou diagonales du pont (HB) qui peuvent être connectées sélectivement au condensateur (C_{F}),
un transformateur (TT) pour déclencher la circulation d'un courant dans la lampe (L), incluant un enroulement primaire (W1) et un enroulement secondaire (W2), ce dernier pouvant être connecté en série avec ladite lampe (L) entre les bornes de sortie (01, 02) du circuit en pont (HB),
un circuit déclencheur (IC; H; C; SC) connecté à l'enroulement primaire du transformateur (TT) pour faire en sorte qu'un courant pulsé circule dans l'enroulement primaire (W1) afin de déclencher la circulation d'un courant dans la lampe (L), et,
des moyens de commande de circuit (ECU) connectés aux entrées de commande des commutateurs (M1-M4) du circuit en pont (HB),
caractérisé en ce que lesdits moyens de commande de circuit (ECU) sont agencés pour diriger le circuit en pont (HB) de telle manière que les commutateurs, qui sont conducteurs quand un courant commence à circuler dans la lampe (L), appartiennent à la voie ou la diagonale du circuit en pont (HB) pour laquelle les courants, circulant dans la lampe (L) par suite de la circulation du courant pulsé dans l'enroulement primaire du transformateur déclencheur (TT) et par suite de la décharge du condensateur de filtrage (C_{F}), respectivement, circulent dans le même sens.

2. Circuit selon la revendication 1, dans lequel les moyens de commande de circuit (ECU) sont connectés au condensateur de filtrage (C_{F}) et sont agencés pour détecter la tension (V_{CF}) à ses bornes, et dans lequel le circuit déclencheur comprend un circuit de décharge (SC) en série avec l'enroulement primaire (W1) du transformateur (TT), un condensateur de déclenchement (C) connecté en parallèle avec le circuit en série constitué par le circuit de décharge (SC) et l'enroulement primaire (W1), et des moyens générateurs de tension (H) pour charger le condensateur (C) à une tension suffisamment élevée pour provoquer une décharge dans le circuit de décharge (SC), la tension de rupture du circuit de décharge (SC) étant entre des valeurs minimale et maximale prédéterminées,
le circuit étant caractérisé en ce que le circuit déclencheur (H, C, SC) est connecté au circuit en pont (HB) et a un agencement tel que, avant que le courant commence à circuler dans la lampe, le condensateur de déclenchement (C) peut être chargé à une première valeur de tension au-dessous de la valeur minimale de la tension de rupture du circuit de décharge (SC) à la suite de la fermeture sélective d'au moins un commutateur d'une première diagonale du circuit en pont (HB) et de la fermeture sélective suivante d'au moins un commutateur de l'autre diagonale du circuit en pont (HB), et est ensuite chargé à une seconde valeur qui est supérieure à la première et suffisamment élevée pour provoquer une décharge dans le circuit de décharge (SC), les moyens de commande de circuit (ECU) étant agencés pour que, avant que le courant commence à circuler dans la lampe, ils provoquent la fermeture sélective des commutateurs de l'autre diagonale du circuit en pont (HB) uniquement après que la tension dans le condensateur de filtrage (C_{F}) a atteint une valeur prédéterminée.

3. Circuit selon la revendication 2, caractérisé en ce que les moyens générateurs de tension comprennent une source de haute tension d'alimentation en courant continu (H) connectée en série avec le condensateur de déclenchement (C) entre une borne d'entrée (I1) et une borne de sortie (02) du circuit en pont (HB) et en ce que les moyens de commande de circuit (ECU) sont agencés pour produire sélectivement la conduction des commutateurs (M3, M2) du circuit en pont (HB) connectés à la borne de sortie (02) avant que le courant commence à circuler dans la lampe.

4. Circuit selon la revendication 2, caractérisé en ce que les moyens générateurs de tension comprennent une source de haute tension d'alimentation en courant continu (H) connectée en série avec le condensateur de déclenchement (C) entre les bornes de sortie (01, 02) du circuit en pont (HB), et les moyens de commande de circuit (ECU) sont agencés pour produire sélectivement la conduction des commutateurs (M3, M4 ; M1, M2) d'une diagonale et de l'autre diagonale du circuit en pont (HB), respectivement, avant que le courant commence à circuler dans la lampe (L).

5. Circuit selon la revendication 3 ou la revendication 4, caractérisé en ce que la source de haute tension d'alimentation en courant continu est dérivée à partir du convertisseur (2).

6. Circuit selon la revendication 4, caractérisé en ce que la source de haute tension d'alimentation en courant continu (H) comprend un circuit élévateur de tension ayant ses bornes d'entrée connectées au condensateur de filtrage (C_{F}) et ses bornes de sortie connectées au condensateur de déclenchement (C) et à une borne de sortie (01) du circuit en pont (HB).

7. Circuit selon l'une quelconque des revendications précédentes, dans lequel les moyens de commande de circuit (ECU) sont agencés, dans des conditions normales de fonctionnement après que le courant a commencé à circuler dans la lampe, pour diriger les commutateurs (M1, M2 ; M3, M4) des deux diagonales du circuit en pont (HB) alternativement dans un mode de mise en circuit-hors circuit à une fréquence de commutation prédéterminée,
le circuit étant caractérisé en ce que les moyens de commande de circuit (ECU) sont agencés pour que les commutateurs de la diagonale du circuit en pont (HB), qui était conductrice quand une conduction a été déclenchée, continuent à être maintenus conducteurs immédiatement après que le courant commence à circuler dans la lampe pendant une période de temps prédéterminée plus longue que la période correspondant à la fréquence de commutation.

8. Circuit selon la revendication 7, caractérisé en ce que les moyens de commande de circuit (ECU) sont agencés pour commander les commutateurs d'une diagonale et de l'autre diagonale du circuit en pont (HB), alternativement, après que le courant a commencé à circuler dans la lampe (L), de telle manière que la valeur moyenne du courant circulant dans la lampe (L) dans un sens pendant un intervalle de temps prédéterminé tend sensiblement à égaler la valeur moyenne du courant circulant dans la lampe (L) dans l'autre sens.

9. Circuit selon la revendication 8, caractérisé en ce que les moyens de commande de circuit (ECU) sont agencés pour régler la valeur moyenne du courant circulant dans la lampe (L) dans un sens et dans l'autre sens selon des procédures prédéterminées, dans un mode non adaptatif.

10. Circuit selon la revendication 8, caractérisé en ce que les moyens de commande de circuit (ECU) sont agencés pour régler la valeur moyenne du courant circulant dans la lampe (L) dans un sens et dans l'autre sens conformément à des conditions de tension et/ou de courant de la lampe dans un mode adaptatif.
